# EUROPÄISCHE PATENTSCHRIFT

(11) **EP 2 387 870 B1**
(45) Veröffentlichungstag und Bekanntmachung des Hinweises auf die Patenterteilung: **10.07.2019**
(21) Anmeldenummer: 11155540.5
(22) Anmeldetag: 09.05.2011
(51) Int. Cl.: A01D 41/14

(54) **Landwirtschaftliche Arbeitsmaschine mit Vorsatzgerät**
Agricultural work machine with attachment
Machine agricole dotée d'un appareil adaptable

(30) Priorität: 21.05.2010 DE 102010021133
(43) Veröffentlichungstag der Anmeldung: 23.11.2011
(73) Patentinhaber: CLAAS Selbstfahrende Erntemaschinen GmbH, 33428 Harsewinkel (DE)
(72) Erfinder: Mörsch, Claus, 33104, Paderborn (DE); Baranski, Michael, 33184, Altenbeken OT. Schwaney (DE); Kühn, Michael, 48361, Beelen (DE)
(74) Vertreter: Beetz & Partner mbB

(56) Entgegenhaltungen:
- EP-A1- 0 208 794
- EP-A1- 1 277 392
- EP-A1- 1 611 781

## Beschreibung

Die vorliegende Erfindung betrifft eine landwirtschaftliche Arbeitsmaschine mit einem Trägerfahrzeug und einem daran montierten Vorsatzgerät, zum Beispiel einen Mähdrescher oder Feldhäcksler, mit einem Schneidwerk. In dem Bestreben, die Produktivität der Erntearbeit zu steigern, sind in den letzten Jahren Schneidwerke mit immer größeren Arbeitsbreiten entwickelt worden. Breiten von über 10 Metern sind keine Seltenheit mehr. Ein solches Schneidwerk ist im Allgemeinen mittig an einem Einzug des Trägerfahrzeugs aufgehängt. Wenn im Betrieb Wankbewegungen des Schneidwerks angeregt werden, können an der Aufhängung hohe, zerstörerische Drehmomente auftreten. Die Enden des Schneidwerks können eine hohe Geschwindigkeit erreichen, so dass, wenn sie auf den Untergrund aufschlagen, auch die Gefahr einer Beschädigung des Schneidwerks besteht.

Aus EP 1 611 781 B1 ist eine selbstfahrende Erntemaschine bekannt, bei der ein Vorsatzgerät im Betrieb fortwährend höhenangepasst wird, um eine gewünschte Arbeitshöhe über dem Untergrund einzuhalten. Das Vorsatzgerät ist hier mit Hilfe von zwei Rädern abgestützt, die mit Hilfe von Hubzylindern ein- und ausfahrbar sind, um die Arbeitshöhe des Vorsatzgeräts anzupassen. Die Hubzylinder sind doppelt wirkend, mit kolbenflächenseitigen und kolbenringseitigen Kammern. Die kolbenflächenseitigen Kammern der zwei Hubzylinder sind untereinander verbunden, und die kolbenringseitigen Kammern sind über Steuerventile miteinander verbindbar. Vor den Rädern angeordnete Abtastbügel erfassen den Abstand des Vorsatzgeräts vom Untergrund und liefern dadurch die zum Betätigen der Steuerventile erforderlichen Informationen. Wenn ein Abtastbügel eine Vertiefung des Untergrunds erfasst, wird der Hubzylinder des ihm nachfolgenden Rades ausgefahren und gleichzeitig der Hubzylinder des gegenüber liegenden Rades eingefahren, indem die kolbenringseitige Kammer dieses letzteren Hubzylinders mit Hydraulikfluid von einer Pumpe beaufschlagt wird, aus der kolbenflächenseitigen Kammer dieses Hubzylinders in die kolbenflächenseitigen Kammer des ersten Hubzylinders übergeht und aus dessen kolbenringseitiger Kammer Hydraulikfluid zum Tank strömt.

Wenn die Erntemaschine ein Wendemanöver fährt, ist es oft erforderlich, das Vorsatzgerät anzuheben, um ein Anstoßen an ein Hindernis zu vermeiden. In dieser angehobenen Stellung haben weder die Abtastbügel noch die Räder Bodenkontakt. Wankbewegungen des Fahrzeugs übertragen sich auf das Vorsatzgerät. Dessen Enden können aufgrund ihrer großen Entfernung von der Wankachse beträchtliche Geschwindigkeiten erreichen. Wenn im Laufe einer solchen Wankbewegung eines der Räder auf dem Boden aufschlägt, wird das Hydraulikfluid in den kolbenflächenseitigen Kammern der Hubzylinder unter hohen Druck gesetzt. Da es nicht abfließen kann und inkompressibel ist, blockieren die Hubzylinder. Die daraus resultierende abrupte Verzögerung kann Schäden am Vorsatzgerät zur Folge haben.

Aufgabe der vorliegenden Erfindung ist, die Betriebssicherheit einer solchen landwirtschaftlichen Arbeitsmaschine zu verbessern.

Die Aufgabe wird gelöst, indem bei einer landwirtschaftlichen Arbeitsmaschine mit einem Fahrzeug und einem Vorsatzgerät, welches während des Erntevorgangs um eine Achse in Fahrtrichtung schwenkbeweglich geführt ist, und das einen Arbeitswerkzeuge tragenden Rahmen aufweist, Mittel vorgesehen sind zum Aufbringen einer Kraft, die einer fahrgeschwindigkeits- und/oder bodenunebenheitsbedingten Schwenkbewegung des Vorsatzgeräts entgegen wirkt, auf das Vorsatzgerät. Diese Mittel wirken auf das Vorsatzgerät, da dessen Masse geringer und dementsprechend die zum Unterdrücken der Schwenkbewegung erforderliche Kraft oder Leistung geringer ist, als wenn das Schwenken des Fahrzeugs unterdrückt werden soll.

Die Mittel zum Aufbringen einer einer Schwenkbewegung des Vorsatzgeräts entgegen wirkenden Kraft auf das Vorsatzgerät umfassen wenigstens zwei Stützen, die voneinander beabstandet und vertikal bewegbar am Rahmen angeordnet sind, um in Kontakt mit dem Boden wenigstens einen Teil des Gewichts des Vorsatzgeräts zu tragen, und die reversierbar nachgiebig sind, um bei einem Kontakt zumindest einer der Stützen mit dem Boden eine der Schwenkbewegung des Vorsatzgerätes entgegenwirkende Stützkraft aufzubringen. Anstatt bei Bodenkontakt kraftlos nachzugeben oder zu blockieren, bewirken die Stützen so eine allmähliche Verzögerung der Wankbewegung des Vorsatzgeräts, die einen Bodenkontakt des Rahmens verhindert oder zumindest soweit dämpft, dass Schäden vermieden werden.

Das Nachgeben der Stützen ist reversierbar, damit die Stützen auch bei einem zweiten Bodenkontakt wieder ihre Dämpfungswirkung entfalten können. Allerdings sollte die Geschwindigkeit der Reversierbewegung der Stützen an die Elastizität einer Verbindung zwischen dem Fahrzeug und dem Vorsatzgerät angepasst sein, d.h. sie sollte so niedrig sein, dass nach einer Auslenkung des Vorsatzgeräts relativ zum Fahrzeug, die zum Nachgeben einer Stütze geführt hat, die durch die Elastizität der Verbindung angetriebene Rückstellbewegung des Vorsatzgeräts dazu führt, dass die Stütze während der Rückstellbewegung den Kontakt mit dem Boden verliert.

Die maximale Tragfähigkeit der Stützen ist vorzugsweise kleiner als das Gewicht des Vorsatzgeräts, so dass dieses Gewicht auch zu einem Teil über die elastische Verbindung vom Fahrzeug getragen wird.

Einer ersten bevorzugten Ausgestaltung zufolge weisen die Stützen wenigstens einen ersten Hubzylinder auf, und der Druck in wenigstens einer Kammer des ersten Hubzylinders ist durch ein Überdruckventil begrenzt. So kann, wenn durch einen Bodenkontakt der Stütze der Druck in dieser Kammer über den Grenzdruck des Überdruckventils steigt, Hydraulikfluid aus der Kammer abfließen, wobei der Bewegung des Vorsatzgeräts proportional zu dem Grenzdruck und der abfließenden Hydraulikfluidmenge Energie entzogen wird.

Einer zweiten bevorzugten Ausgestaltung zufolge weisen die Stützen wenigstens einen ersten Hubzylinder mit einer an einem ersten Puffer angeschlossenen Kammer auf, und bei Überschreitung der maximalen Tragfähigkeit ist Hydraulikfluid aus der wenigstens einen Kammer in den ersten Puffer verdrängbar.

Erfindungsgemäß ist eine Kopplungseinrichtung zwischen den Stützen vorgesehen, um, wenn eine der Stützen unter Last nachgibt, die andere Stütze gleichläufig zu der einen Stütze zu bewegen. Durch eine solche Konstruktion addieren sich die Tragfähigkeiten der einzelnen Stützen; d.h. wenn nur eine der beiden Stützen Bodenkontakt hat, ist ihre Tragfähigkeit so groß wie die von beiden Stützen gemeinsam, wenn beide Bodenkontakt haben.

Eine derartige Kopplung kann insbesondere dadurch realisiert werden, dass der erste und ein zweiter Hubzylinder doppelt wirkend sind, mit jeweils einer ersten Kammer, die zum Ausüben einer abwärts gerichteten Kraft auf die jeweils dem Hubzylinder zugeordnete Stütze mit Hydraulikfluid beaufschlagbar ist, und einer zweiten Kammer, die zum Ausüben einer aufwärts gerichteten Kraft auf die Stütze mit Hydraulikfluid beaufschlagbar ist, und die Kopplung zwischen den Zylindern wird hergestellt, indem die erste Kammer des zweiten Hubzylinders mit der zweiten Kammer des ersten Hubzylinders kommuniziert.

Da der Druck in den ersten Kammern der Hubzylinder das Gewicht des Vorsatzgeräts abstützt, sind die ersten Kammern vorzugsweise kolbenflächenseitige Kammern, da diese im Allgemeinen einen größeren Querschnitt haben als kolbenringseitige Kammern. Je größer der Querschnitt, umso niedriger ist der zum Erzeugen der Solltragkraft erforderliche Druck in den ersten Kammern.

Es genügt im Falle der ersten Ausgestaltung, wenn nur die erste Kammer des ersten Hubzylinders mit dem oben erwähnten Überdruckventil kommuniziert, da die erste Kammer des zweiten Hubzylinders, wenn dieser zurückweicht, Hydraulikfluid an die zweite Kammer des ersten Hubzylinders abgeben kann.

Um trotz des Querschnittsunterschiedes zwischen kolbenflächenseitiger Kammer und kolbenringseitiger Kammer eines Hubzylinders gleiche Bewegungen der ersten und zweiten Stütze zu gewährleisten, hat der ersten Ausgestaltung zufolge der erste Hubzylinder vorzugsweise einen größeren Querschnitt als der zweite.

Zwischen der zweiten Kammer des zweiten Zylinders und einem Tank ist vorzugsweise ein entsperrbares Rückschlagventil vorgesehen. Ein solches Rückschlagventil erlaubt jederzeit das Nachgeben einer Stütze bei Überschreitung ihrer maximalen Tragkraft, kann aber im gesperrten Zustand eine Reversierbewegung der Stütze unterbinden.

Die zweite Ausgestaltung ist vorzugsweise bezüglich der Verbindungen zwischen den Hubzylindern symmetrisch, d.h. die zweite Kammer des zweiten Hubzylinders kommuniziert mit dem ersten Puffer, und die erste Kammer des zweiten Hubzylinders und die zweite Kammer des ersten Hubzylinders kommunizieren mit einem zweiten Puffer.

Im Gleichgewichtsfall sind bei dieser Ausgestaltung die Drücke in den ersten und zweiten Kammern beider Hubzylinder gleich, und eine Stützkraft resultiert aus der Tatsache, dass die zweiten Kammern einen kleineren Querschnitt als die ersten Kammern haben.

Eine bodenberührende Spitze der Stützen kann als Kufe oder als Rolle ausgebildet sein.

Mittel zum Erfassen der vertikalen Position können an wenigstens einer der Stützen vorgesehen sein, um anhand der hierdurch erfassten vertikalen Position eine automatische Regulierung der Arbeitshöhe des Vorsatzgeräts, wie z.B. in EP 1 611 781 B1 beschrieben, zu realisieren.

Um die schwankende Last des Vorsatzgerätes aufzufangen, kann das Fahrzeug zweckmäßigerweise auch mit einem Raupenfahrwerk ausgestattet sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung einer erfindungsgemäßen landwirtschaftlichen Arbeitsmaschine;
- Fig. 2: eine schematische Darstellung eines das Vorsatzgerät unterstützenden Hydrauliksystems gemäß einer ersten Ausgestaltung;
- Fig. 3: eine zweite Ausgestaltung des Hydrauliksystems;
- Fig. 4: das Hydrauliksystem gemäß einer dritten Ausgestaltung; und
- Fig. 5: eine vierte Ausgestaltung des Hydrauliksystems.

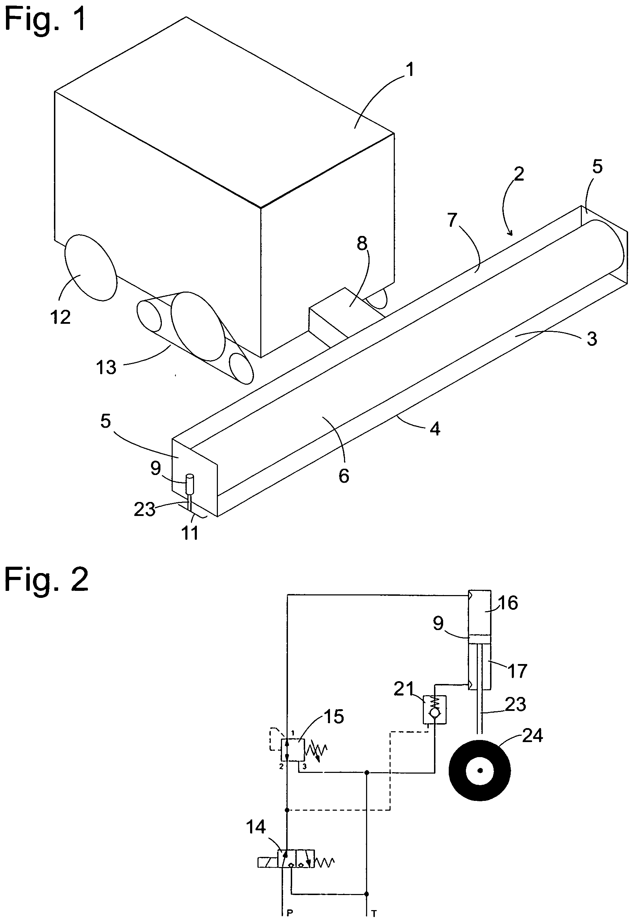

Fig. 1 zeigt eine schematische Ansicht einer erfindungsgemäßen landwirtschaftlichen Arbeitsmaschine mit einem Fahrzeug 1 und einem an einer Vorderseite des Fahrzeugs 1 montierten Vorsatzgerät 2. Die Arbeitsmaschine kann insbesondere eine beliebige selbstfahrende Erntemaschine, insbesondere ein Mähdrescher oder ein Feldhäcksler sein, und das Vorsatzgerät 2 ist ein an ein jeweiliges einzubringendes Erntegut angepasstes Schneidwerk. Ein Rahmen des Schneidwerks umfasst in an sich bekannter Weise eine Bodenplatte 3 mit an ihrer Vorderkante 4 beweglichen Messern, Seitenplatten 5 und eine Rückwand 7. Zwischen den Seitenplatten 5 ist eine Einzugwalze 6 drehbar aufgehängt. An der Rückwand 7 greift ein Schrägförderer 8 des Fahrzeugs an. Der Schrägförderer 8 ist am Fahrzeug 1 federnd abgestützt und bildet eine Viergelenkverbindung zwischen Vorsatzgerät 2 und Fahrzeug 1, die Wankbewegungen (d.h. Schwenkbewegungen um eine in Fahrtrichtung orientierte Achse) des Vorsatzgeräts 2 relativ zum Fahrzeug 1 sowie Auf- und Abwärtsbewegungen unter Beibehaltung der Orientierung des Vorsatzgeräts 2 im Raum zulässt.

An den Seitenplatten 5 ist jeweils ein Hubzylinder 9 bzw. 10 (in Fig. 1 verdeckt) angebracht, an dessen gegen den Untergrund gerichteter Kolbenstange 23 eine Kufe 11 montiert ist. Die zwei Hubzylinder 9, 10 sind vorgesehen, um einen Teil des Gewichts des Vorsatzgeräts 2 zu tragen; der Rest des Gewichts lastet über den Schrägförderer 8 auf dem Fahrwerk des Fahrzeugs 1.

Dieses Fahrwerk kann in üblicher Weise zwei oder mehr Achsen mit luftbereiften Rädern 12 aufweisen; im vorliegenden Fall ist, um die im Laufe des Betriebs schwankende Last des Vorsatzgeräts 2 auszugleichen, ein Raupenfahrwerk 13 zumindest an einer Vorderachse des Fahrzeugs 1 bevorzugt.

Fig. 2 zeigt schematisch eine Hälfte eines Hydrauliksystems gemäß einer ersten Ausgestaltung der Erfindung. Dargestellt ist der Hubzylinder 9, wobei die dem Hubzylinder 9 zugeordnete Stütze hier durch die Kolbenstange 23 des Hubzylinders und, anstelle der Kufe, durch ein von der Kolbenstange 23 drehbar gehaltenes Rad 24 gebildet ist. Generell können in allen hier beschriebenen Ausgestaltungen Räder oder Kufen verwendet werden, denkbar ist auch, dass je nach Bodenbeschaffenheit und Erntegut Räder und Kufen durch einen Benutzer gegeneinander austauschbar sind.

Der Hubzylinder 9 hat eine kolbenflächenseitige Kammer 16 und eine kolbenringseitige Kammer 17. Ein Druckminderer 15 hat einen Hochdruckanschluss, der mit einem Wegeventil 14 verbunden ist, einen mit der kolbenflächenseitigen Kammer 16 verbundenen geregelten Anschluss und einen Abflussanschluss, der über eine Anschlusskupplung T des Vorsatzgeräts 2 mit einem Tank an Bord des Fahrzeugs kommuniziert. Das Wegeventil 14 hat zwei Einlässe, die wahlweise mit dem Hochdruckanschluss des Druckminderers 15 verbindbar sind, und von denen der eine über die Anschlusskupplung T mit dem Tank und der andere über eine Anschlusskupplung P mit dem Hochdruckausgang einer Pumpe an Bord des Fahrzeugs 1 kommuniziert. Die kolbenringseitige Kammer 17 ist mit der Anschlusskupplung T über ein ansteuerbares Rückschlagventil 21 verbunden, das den Weg von der kolbenringseitigen Kammer 17 zur Anschlusskupplung T sperrt, sofern nicht ein hoher Steuerdruck am Hochdruckanschluss des Druckminderers 15 anliegt. Eine zweite Hälfte des Hydrauliksystems, die mit der in Fig. 2 gezeigten baugleich ist, ist dem zweiten Hubzylinder 10 zugeordnet.

Wenn das Vorsatzgerät 2 in Betrieb ist und in geringem Abstand über einer abzuerntenden Ackerfläche geführt wird, befindet sich das Wegeventil 14 in der in Fig. 2 gezeigten Stellung. Ein von der Pumpe gelieferter hoher Druck liegt am Hochdruckanschluss des Druckminderers 15 und am Steueranschluss des Rückschlagventils 21 an. Die Kammer 17 ist drucklos, und in der Kammer 16 herrscht der am Druckminderer 15 eingestellte Sekundärdruck. Wenn das Rad 24 auf eine Bodenerhöhung trifft und nach oben gedrückt wird, steigt der Druck in der Kammer 16 über den Sekundärdruck des Druckminderers 15, und Hydraulikfluid aus der Kammer 16 entweicht über den in dieser Situation als Überdruckventil wirkenden Druckminderer 15 und dessen Abflussleitung. Beim Überfahren einer Bodenvertiefung hingegen strömt Hydraulikfluid von der Pumpe über das Wegeventil 14 und den Druckminderer 15 in die Kammer 16 zurück, und die Kolbenstange 23 fährt aus, bis sie wieder ein Gewicht trägt, das dem Produkt aus Querschnittsfläche der Kammer 16 und Sekundärdruck des Druckminderers 15 entspricht.

Wenn das Vorsatzgerät 2, zum Beispiel im Vorgewende, über die für den Erntebetrieb vorgesehene Arbeitshöhe angehoben wird, während das Wegeventil 14 in der in Fig. 2 gezeigten Stellung ist, fährt die Kolbenstange 23 bis zu einem Anschlag aus, in dem das Volumen der kolbenringseitigen Kammer 17 minimal ist. Wenn in dieser Situation das Vorsatzgerät 2 ins Wanken gerät und dabei das Rad 24 gegen den Untergrund stößt, wird die Kolbenstange 23 gegen den in der kolbenflächenseitigen Kammer 16 herrschenden Druck zurückgedrängt, und Hydraulikfluid aus der Kammer 16 strömt über ein im Druckminderer 15 integriertes Überdruckventil zum Tankanschluss T. Dadurch wird die Wankbewegung kontinuierlich und ohne eine Gefahr der Beschädigung des Vorsatzgeräts ausgebremst.

Wenn die Wankbewegung zum Stillstand gekommen ist, bewirkt der torsionselastische Aufbau des Schrägförderers 8 eine Drehung des Vorsatzgeräts zurück in seine Gleichgewichtslage. Dadurch wird das Rad 24 entlastet, und es kann wieder Hydraulikfluid von der Pumpe zur Kammer 16 fließen. Der Durchsatz des Wegeventils 14 und des Druckminderers 15 ist allerdings auf einen so niedrigen Wert begrenzt, dass das Rad 24 bei der Rückbewegung des Vorsatzgeräts in die Gleichgewichtslage den Bodenkontakt verliert. So kann die Ausfahrbewegung des Rades 24 nicht die Wankbewegung in Gegenrichtung antreiben und zu einem Aufschlagen des anderen Rades auf dem Untergrund führen.

Wenn das Wegeventil 14 in seine zweite, in Fig. 2 nicht dargestellte Stellung umgeschaltet wird, baut sich der Druck am Hochdruckanschluss des Druckminderers 15 ab, und das Rückschlagventil 21 sperrt. Wenn nun der Schrägförderer 8 abgesenkt wird, und das gesamte Gewicht des Vorsatzgeräts 2 auf den zwei Rädern 24 ruht, fließt das Druckfluid aus der Kammer 16 über den Druckminderer 15 zum Tank ab, und die Kolbenstange 23 wird in den Hubzylinder 9 hineingedrückt. Wenn nun das Vorsatzgerät 2 wieder angehoben wird, verhindert das Rückschlagventil 21 ein erneutes Ausfahren der Kolbenstange 23 unter dem Gewicht des daran hängenden Rades 24, so dass das Vorsatzgerät 2 bequem und sicher auf einem Transportfahrzeug oder einer Ablage abgesetzt werden kann.

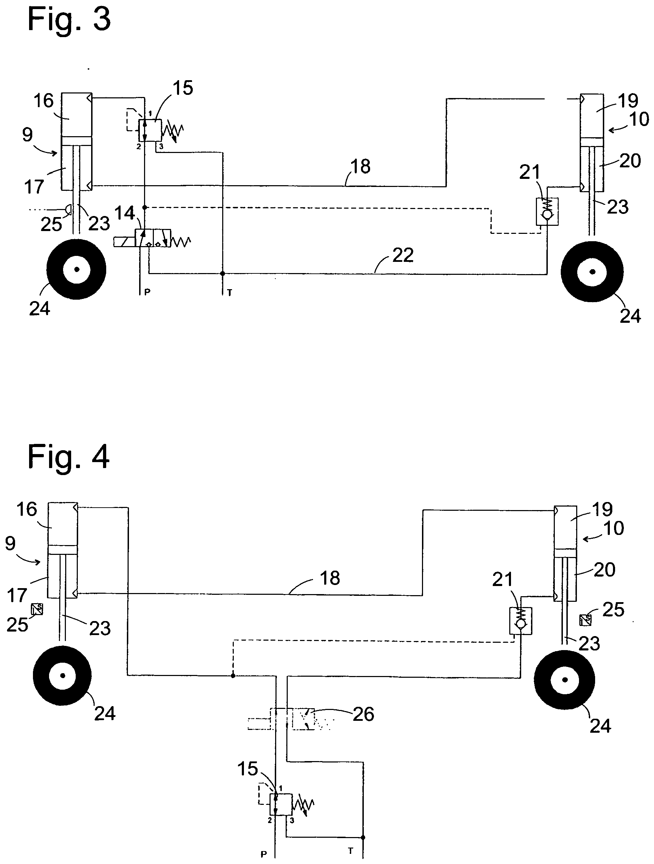

Fig. 3 zeigt schematisch ein Hydrauliksystem, in dem die beiden Hubzylinder 9, 10 untereinander gekoppelt sind. Komponenten dieses Hydrauliksystems, die denen des Systems der Fig. 2 gleichen, sind mit denselben Bezugszeichen versehen und werden nicht sämtlich erneut erläutert. In der dargestellten Konfiguration ist das Wegeventil 14 offen, und der Druck der Pumpe liegt am Hochdruckanschluss des Druckminderers 15 an. Der geregelte Ausgang des Druckminderers ist mit der kolbenflächenseitigen Kammer 16 des Hubzylinders 9 verbunden, so dass diese unter dem Sekundärdruck des Druckminderers 15 steht. Die kolbenringseitige Kammer 17 desselben Hubzylinders 9 kommuniziert über eine Ausgleichsleitung 18 mit einer kolbenflächenseitigen Kammer 19 des Hubzylinders 10. Eine kolbenringseitige Kammer 20 dieses Hubzylinders 10 wiederum ist über das schaltbare Rückschlagventil 21 mit einer zu dem Tank des Fahrzeugs 1 führenden Niederdruckleitung 22 verbunden.

Im Gleichgewichtszustand entspricht das von den zwei Hubzylindern 9, 10 getragene Gewicht dem Sekundärdruck des Druckminderers 15, multipliziert mit der Querschnittsfläche der Kammer 16. Die Kammer 20 ist drucklos, und der Druck in den Kammern 17, 19 stellt sich entsprechend der Verteilung des Gewichts des Vorsatzgeräts 2 auf die beiden Rollen 24 selbsttätig ein.

Wenn die rechte Rolle 24 eine Bodenerhebung überfährt, steigt der Druck in den Kammern 17, 19, und wenn daraufhin der Druck in der Kammer 16 den eingestellten Sekundärdruck des Druckminderers 15 überschreitet, fließt Hydraulikfluid aus der Kammer 16 über den Druckminderer 15 zur Niederdruckleitung 22 ab. Gleichzeitig saugt die Kammer 20 Hydraulikfluid aus der Niederdruckleitung 22 an. So geben beide Hubzylinder 9, 10 gleichzeitig nach. Der Durchmesser des Hubzylinders 9 ist größer als der des Hubzylinders 10, so dass die Querschnitte der Kammern 17, 19 gleich gemacht sein können und der Hub beider Zylinder 9, 10 identisch ist. Das Nachgeben des Hubzylinders 10 unter dem durch die überfahrene Bodenerhebung ausgeübten Druck führt daher nicht dazu, dass ein Drehmoment auf das Vorsatzgerät 2 wirkt, das eine Wankbewegung des Vorsatzgeräts 2 auslösen könnte; statt dessen kommt es lediglich zu einer Umverteilung der Stützkraft von den Hubzylindern 9, 10 auf den Schrägförderer 8. Da dieser das Vorsatzgerät 2 am Schwerpunkt unterstützt, bewirkt die von ihm zusätzlich aufgebrachte Stützkraft kein Drehmoment. Stattdessen sackt das Vorsatzgerät 2 nur so weit ab, bis die Rückstellkraft der federnden Aufhängung am Schrägförderer 8 die erhöhte Last kompensiert hat.

In analoger Weise wird auch der Hubzylinder 9 nach oben zurückgedrängt, wenn seine Rolle 24 eine Bodenerhebung überfährt. Gleichzeitig wird Hydraulikfluid aus der Kammer 19 des Hubzylinders 10 in die Kammer 17 des Hubzylinders 9 gesaugt, so dass auch der Hubzylinder 10 nachgibt.

Wenn beim Fahren im Vorgewende das Vorsatzgerät 2 vom Boden abgehoben ist, ist die Funktionsweise des Hydrauliksystems im Wesentlichen die gleiche wie oben beschrieben. Da jeweils nur eines der beiden Räder 24 bei einer Wankbewegung Bodenkontakt haben kann, stellt die gesamte Tragfähigkeit des Hydrauliksystems, entsprechend dem Produkt von Sekundärdruck des Druckminderers 15 und Querschnitt der Kammer 16, zum Abbremsen der Wankbewegung zur Verfügung, unabhängig davon, welche der beiden Rollen 24 den Boden berührt.

Einer Weiterbildung zufolge kann ein Sensor 25 zum Erfassen der vertikalen Stellung der Kolbenstange 23 am Hubzylinder 9 oder 10 vorgesehen sein. Das Messsignal des Sensors 25 kann genutzt werden, um die Höhe des Vorsatzgeräts 2 über dem Boden mit Hilfe von an dem Vorsatzgerät 2 oder dem Schrägförderer 8 angreifenden Hubzylindern des Fahrzeugs 1 nachzuführen.

Fig. 4 zeigt eine alternative Ausgestaltung des Hydrauliksystems. Die Hubzylinder 9, 10 sind baugleich mit denen der zweiten Ausgestaltung und werden nicht erneut beschrieben. Der Druckminderer 15 ist hier direkt mit der Pumpe über den Anschluss P verbunden, und ein Wegeventil 26 verbindet in seiner in der Figur gezeigten Stellung den geregelten Ausgang des Druckminderers 15 mit der Kammer 16 des Hubzylinders 9. Die Kammern 17, 19 sind wie in Fig. 2 durch eine Ausgleichsleitung 18 verbunden, und die Kammer 20 ist mit dem Tankanschluss T über das Rückschlagventil 21 und das Wegeventil 26 verbunden. Wenn sich das Wegeventil 26 in der in Fig. 4 gezeigten Stellung befindet, verhalten sich die Hubzylinder 9, 10 genauso wie bei der Ausgestaltung der Fig. 3. In einer zweiten Stellung des Wegeventils 26 hingegen ist der geregelte Ausgang des Druckminderers 15 mit der Kammer 20 des Hubzylinders 10 verbunden, und die Kammer 16 des Hubzylinders 9 ist mit dem Tankanschluss T verbunden. In dieser Stellung des Wegeventils 26 fließt Hydraulikfluid vom Druckminderer 15 in die Kammer 20 und aus der Kammer 19 in die Kammer 17. Die Kolbenstangen 23 können so in ihre eingezogene Anschlagstellung verfahren werden, ohne dass dafür das Vorsatzgerät 2 am Fahrzeug 1 abgesenkt werden muss. Das Einziehen der Kolbenstangen 23 benötigt so weniger Zeit als bei der Ausgestaltung der Fig. 2 oder 3.

Den Ausgestaltungen der Fig. 3 und 4 ist gemeinsam, dass sie ihre Funktion, Wankbewegungen des Vorsatzgeräts 2 zu unterdrücken, nur wahrnehmen können, solange hoher Druck am Pumpenanschluss P anliegt, um den Sekundärdruck am Druckminderer 15 aufrecht zu erhalten. Wenn beim Überfahren einer Bodenerhebung die Kolbenstangen 23 zurückgewichen sind, muss, um den vorherigen Zustand wieder herzustellen, Hydraulikfluid unter Druck zugeführt werden. Hierfür muss Antriebsleistung bereitgestellt werden, was den Kraftstoffverbrauch der Arbeitsmaschine erhöht.

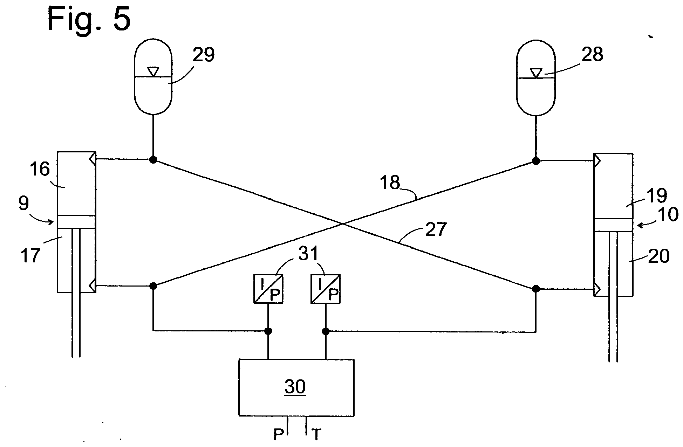

Fig. 5 hingegen zeigt ein Diagramm eines hydraulischen Systems gemäß einer vierten Ausgestaltung der Erfindung, die auch dann funktioniert, wenn nicht kontinuierlich Hydraulikfluid unter hohem Druck zur Verfügung steht. Die Hubzylinder 9, 10 dieser Ausgestaltung unterscheiden sich von denjenigen der Figuren 3 und 4 dadurch, dass erstere identische Querschnitte haben. Es ist nicht nur die Ausgleichsleitung 18 zwischen der kolbenringseitigen Kammer 17 des Hubzylinders 9 und der kolbenflächenseitigen Kammer 19 des Hubzylinders 10 vorgesehen, sondern umgekehrt auch eine Ausgleichsleitung 27 zwischen der kolbenringseitigen Kammer 20 und der kolbenflächenseitigen Kammer 16. Mit beiden Ausgleichsleitungen 18, 27 ist jeweils ein Druckpuffer 28 bzw. 29 verbunden. Wenn sich das hydraulische System im Gleichgewicht befindet, sind die Drücke in allen vier Kammern 16, 17, 19, 20 identisch, und die Stützkraft, mit der sich im Erntebetrieb Kufen 11 oder Räder 24 am unteren Ende der Kolbenstangen 23 auf dem Untergrund abstützen, ist das Produkt dieses Drucks mit dem Querschnitt der Kolbenstangen 23. Die Kopplung über die Ausgleichsleitung 18, 27 führt dazu, dass beide Kolbenstangen 23 in gleicher Weise zurückweichen, wenn auf eine von ihnen eine Kraft einwirkt, die höher ist als die oben erwähnte Stützkraft. Durch die gleichmäßige Rückzugsbewegung beider Hubzylinder 9, 10 wird das Fahrwerk des Fahrzeugs 1 über den Schrägförderer 8 zusätzlich belastet und bringt die restliche zur Abstützung des Vorsatzgeräts 2 erforderliche Kraft auf, ohne ein Drehmoment auf das Vorsatzgerät 2 auszuüben.

Ein Ventilblock 30 verbindet einen Pumpenanschluss P und einen Tankanschluss T selektiv mit den beiden Ausgleichsleitungen 18, 27. Wenn das Hydrauliksystem in Betrieb ist, ist der Ventilblock 30 vollständig gesperrt, und Druckfluid wird lediglich zwischen den Kammern 16, 20 bzw. 17, 19 und dem jeweils zugeordneten Druckpuffer 28 ausgetauscht. Wenn im Betrieb eine der beiden Kolbenstangen 23 zurückgedrängt wird, verkleinern sich die kolbenflächenseitigen Kammern 16, 19 beider Hubzylinder 9, 10, und das dabei verdrängte Hydraulikfluid verteilt sich auf die kolbenringseitigen Kammern 20, 17 des jeweils anderen Hubzylinders und die Druckpuffer 28, 29. Sobald die auf die Kolbenstange wirkende Kraft wieder nachlässt, kehren beide Hubzylinder, angetrieben vom Druck in den Puffern 28, 29, in die Ruhestellung zurück.

Wie weit die Kolbenstangen 23 in dieser Ruhestellung ausgefahren sind, hängt von dem Druck in den Kammern 16, 17 bzw. 19, 20 bzw. von der Menge an Hydraulikfluid in den zwei Zweigen des Systems ab, die aus den Kammern 16, 19, der Ausgleichsleitung 18 und dem daran angeschlossenen Druckpuffer 28 bzw. den Kammern 16, 20, der Ausgleichsleitung 27 und dem angeschlossenen Druckpuffer 29 bestehen. Je größer die Menge des Hydraulikfluids im System ist, umso weiter ausgefahren sind die Kolbenstangen 23 bei einer gegebenen Stützkraft. Damit in einer Gleichgewichtsstellung beide Kolbenstangen 23 gleich weit ausgefahren sind, muss die Menge an Hydraulikfluid in den zwei Zweigen des Systems gleich sein. Um diese Menge nach Bedarf anzupassen, wird im Ventilblock 30 eine Verbindung zwischen dem Pumpenanschluss P oder dem Tankanschluss T und einer der Ausgleichsleitungen 18, 27 hergestellt. Um sicherstellen zu können, dass beide Zweige gleich viel Hydraulikfluid enthalten, sind die Sensoren 31 vorgesehen. Sie liefern zum einen Durchflussmesswerte, die integriert werden können, um die Menge an Hydraulikfluid in jedem Zweig zu überwachen. überwacht werden. Zum anderen liefern die Sensoren Druckmesswerte, die einen Rückschluss auf das Volumen der angeschlossenen Zweige und damit auf die Stellung der Kolbenstangen 23 ermöglichen. Anstelle der Durchfluss-/Drucksensoren 31 könnten auch Positionssensoren 25 wie in Fig. 3 gezeigt vorgesehen sein, wobei allerdings hier, weil anders als bei der Ausgestaltung der Fig. 3 die Menge an Hydraulikfluid in dem die Kammern 17, 19 umfassenden Zweig veränderbar ist, zu jedem Hubzylinder 9 bzw. 10 ein Sensor 31 oder 25 benötigt wird.

Wenn das Vorsatzgerät 2 vom Untergrund abgehoben wird, während die Kammern 16, 17, 19, 20 unter Druck stehen, dann fahren wie für das erste Ausführungsbeispiel beschrieben die Kolbenstangen 23 bis an einen Anschlag aus, an dem das Volumen der kolbenringseitigen Kammern 17, 20 minimal ist, so dass die gesamte Bewegungsfreiheit der Kolbenstangen 23 als Bremsweg zum Abfangen einer Wankbewegung zur Verfügung steht.

### Bezugszeichen

- 1: Fahrzeug
- 2: Vorsatzgerät
- 3: Bodenplatte
- 4: Vorderkante
- 5: Seitenplatte
- 6: Einzugwalze
- 7: Rückwand
- 8: Schrägförderer
- 9: Hubzylinder
- 10: Hubzylinder
- 11: Kufe
- 12: Rad
- 13: Raupenfahrwerk
- 14: Wegeventil
- 15: Druckminderer
- 16: kolbenflächenseitige Kammer
- 17: kolbenringseitige Kammer
- 18: Ausgleichsleitung
- 19: kolbenflächenseitige Kammer
- 20: kolbenringseitige Kammer
- 21: Rückschlagventil
- 22: Niederdruckleitung
- 23: Kolbenstange
- 24: Rolle
- 25: Sensor
- 26: Wegeventil
- 27: Ausgleichsleitung
- 28: Druckpuffer
- 29: Druckpuffer
- 30: Ventilblock
- 31: Sensor

## Patentansprüche

1. Landwirtschaftliche Arbeitsmaschine mit einem Fahrzeug (1) und einem Vorsatzgerät (2), welches während des Erntevorgangs um eine in Fahrtrichtung orientierte Achse schwenkbeweglich geführt ist, und das einen Arbeitswerkzeuge (4, 6) tragenden Rahmen (3, 5, 7) aufweist, wobei die landwirtschaftliche Arbeitsmaschine als Mittel zum Aufbringen einer Kraft, die einer fahrgeschwindigkeits- und/oder bodenunebenheitsbedingten Schwenkbewegung des Vorsatzgeräts (2) um die Achse entgegen wirkt, auf das Vorsatzgerät (2) wenigstens zwei Stützen (23, 11; 23, 24) aufweist, die voneinander beabstandet und vertikal bewegbar an dem Rahmen (3, 5, 7) angeordnet sind, um in Kontakt mit dem Boden wenigstens ein Teil des Gewichts des Vorsatzgeräts (2) zu tragen, wobei die Stützen (23, 11; 23, 24) reversierbar nachgiebig sind, um bei einem Kontakt zumindest einer der Stützen (23, 11; 23, 24) mit dem Boden eine der Schwenkbewegung des Vorsatzgerätes (2) entgegenwirkende Stützkraft aufzubringen, **dadurch gekennzeichnet, dass** eine Kopplungseinrichtung zwischen den Stützen (23, 11; 23, 24) vorgesehen ist, um, wenn eine der Stützen (23, 11; 23, 24) unter Last nachgibt, die andere Stütze (23, 11; 23, 24) gleichläufig zu der einen Stütze zu bewegen.

2. Landwirtschaftliche Arbeitsmaschine nach Anspruch 1, **dadurch gekennzeichnet, dass** eine Verbindung zwischen dem Fahrzeug und dem Vorsatzgerät gegenüber einer Wankbewegung des Vorsatzgerätes elastisch ist, um nach einer Schwenkbewegung des Vorsatzgerätes aus einer Ruhestellung heraus eine Rückstellbewegung des Vorsatzgeräts in Richtung der Ruhestellung anzutreiben, wobei eine Stütze, die durch die Schwenkbewegung zum Nachgeben gebracht wurde, während der Rückstellbewegung den Kontakt mit dem Boden verliert.

3. Landwirtschaftliche Arbeitsmaschine nach Anspruch 1 oder 2, **dadurch gekennzeichnet, dass** die maximale Tragfähigkeit der Stützen (23, 11; 23, 24), bei deren Überschreitung die Stützen (23, 11; 23, 24) nachgeben, kleiner als das Gewicht des Vorsatzgeräts (2) ist.

4. Landwirtschaftliche Arbeitsmaschine nach Anspruch 1, 2 oder 3, **dadurch gekennzeichnet, dass** die Stützen (23, 11; 23, 24) wenigstens einen ersten Hubzylinder (9; 10) aufweisen und dass der Druck in wenigstens einer Kammer des ersten Hubzylinders (9; 10) durch ein Überdruckventil begrenzt ist.

5. Landwirtschaftliche Arbeitsmaschine nach Anspruch 1, 2 oder 3, **dadurch gekennzeichnet, dass** die Stützen wenigstens einen ersten Hubzylinder (9) mit einer an einen ersten Puffer (29) angeschlossenen Kammer (16) aufweisen, und dass bei Überschreitung der maximalen Tragfähigkeit Hydraulikfluid aus der wenigstens einen Kammer (16) in den ersten Puffer (29) verdrängbar ist.

6. Landwirtschaftliche Arbeitsmaschine nach einem der Ansprüche 1 bis 5, **dadurch gekennzeichnet, dass** der erste und ein zweiter Hubzylinder (9; 10) doppelt wirkend sind, mit jeweils einer ersten Kammer (16; 19), die zum Ausüben einer abwärts gerichteten Kraft auf die dem jeweiligen Hubzylinder (9; 10) zugeordnete Stütze (23, 11; 23, 24) mit Hydraulikfluid beaufschlagbar ist, und einer zweiten Kammer (17; 20), die zum Ausüben einer aufwärts gerichteten Kraft auf die Stütze (23, 11; 23, 24) mit Hydraulikfluid beaufschlagbar ist, und dass die erste Kammer (19) des zweiten Hubzylinders (10) mit der zweiten Kammer (17) des ersten Hubzylinders (9) kommuniziert.

7. Landwirtschaftliche Arbeitsmaschine nach Anspruch 6, **dadurch gekennzeichnet, dass** die ersten Kammern (16; 19) kolbenflächenseitige Kammern und die zweiten Kammern (17; 20) kolbenringseitige Kammern sind.

8. Landwirtschaftliche Arbeitsmaschine nach Anspruch 7, soweit auf Anspruch 5 rückbezogen, **dadurch gekennzeichnet, dass** die erste Kammer (16) des ersten Hubzylinders (9) mit dem Überdruckventil kommuniziert und der erste Hubzylinder (9) einen größeren Querschnitt als der zweite Hubzylinder (10) aufweist.

9. Landwirtschaftliche Arbeitsmaschine nach einem der Ansprüche 6 bis 8, dass ein entsperrbares Rückschlagventil (21) zwischen der zweiten Kammer (20) des zweiten Hubzylinders (10) und einem Tank vorgesehen ist.

10. Landwirtschaftliche Arbeitsmaschine nach einem der Ansprüche 6, 7 oder 9, soweit auf Anspruch 5 rückbezogen, **dadurch gekennzeichnet, dass** die zweite Kammer (20) des zweiten Hubzylinders (10) mit dem ersten Puffer (29) kommuniziert und dass die erste Kammer (19) des zweiten Hubzylinders (10) und die zweite Kammer (17) des ersten Hubzylinders (9) mit einem zweiten Puffer (28) kommunizieren.

11. Landwirtschaftliche Arbeitsmaschine nach Anspruch 10, **dadurch gekennzeichnet, dass** die zweiten Kammern (17, 20) einen kleineren Querschnitt als die ersten Kammern (16, 19) haben.

12. Landwirtschaftliche Arbeitsmaschine nach einem der vorhergehenden Ansprüche, **dadurch gekennzeichnet, dass** eine bodenberührende Spitze der Stützen (23, 11; 23; 24) als Kufe (11) oder als Rolle (24) ausgebildet ist.

13. Landwirtschaftliche Arbeitsmaschine nach einem der vorhergehenden Ansprüche, **gekennzeichnet durch** Mittel (25, 30) zum Erfassen der vertikalen Position jeder Stütze (23, 11; 23; 24) .

14. Landwirtschaftliche Arbeitsmaschine nach einem der vorhergehenden Ansprüche, **dadurch gekennzeichnet, dass** das Fahrzeug (1) ein Raupenfahrwerk (13) aufweist.

## Claims

1. An agricultural machine with a vehicle (1) and a front attachment (2), which during the harvesting operation is pivot-moveably guided about an axis orientated in the travelling direction and which comprises a frame (3, 5, 7) supporting working tools (4, 6), wherein the agricultural machine, as means for applying a force, which counteracts a pivot movement of the front attachment (2) about the axis due to a travelling speed and/or ground irregularity on the front attachment (2) comprises at least two supports (23, 11; 23, 24), which are arranged on the frame (3, 5, 7) spaced from one another and vertically moveable in order to, in contact with the ground, carry at least a part of the weight of the front attachment (2), wherein the supports (23, 11; 23, 24) are reversibly yielding in order to, upon a contact of at least one of the supports (23, 11; 23, 24) with the ground, apply a supporting force counteracting the pivot movement of the front attachment (2), **characterized in that**
a coupling device is provided between the supports (23, 11; 23, 24), in order to, when one of the supports (23, 11; 23, 24) gives way under load, move the other support (23, 11; 23, 24) synchronously with the one support.

2. The agricultural machine according to claim 1, **characterized in that** a connection between the vehicle and the front attachment is elastic relative to a rolling of the front attachment in order to, after a rolling movement of the front attachment out of a rest position, drive a return movement of the front attachment in the direction of the rest position, wherein a support which was caused to yield by the pivot movement, loses the contact with the ground during the return movement.

3. The agricultural machine according to claim 1 or 2, **characterized in that** the maximum load capacity of the supports (23, 11; 23, 24), upon exceeding of which the supports (23, 11; 23, 24) give way, is less than the weight of the front attachment (2).

4. The agricultural machine according to claim 1, 2 or 3, **characterized in that** the supports (23, 11; 23, 24) comprise at least one first lift cylinder (9; 10) and **in that** the pressure in at least one chamber of the first lift cylinder (9; 10) is limited by a pressure relieve valve.

5. The agricultural machine according to claim 1, 2 or 3, **characterized in that** the supports comprise at least one first lift cylinder (9) with a chamber (16) connected to a first buffer (29), and that when the maximum load capacity is exceeded, hydraulic fluid can be displaced from the first chamber (16) into the first buffer (29).

6. The agricultural machine according to any one of the claims 1 to 5, **characterized in that** the first and a second lift cylinder (9; 10) are double-acting, each with a first chamber (16; 19), which for applying a downward directed force on the support (23, 11; 23, 24) assigned to the respective lift cylinder (9; 10) can be acted on by hydraulic fluid, and a second chamber (17; 20), which for applying an upwardly directed force on the support (23, 11; 23, 24) can be acted on by hydraulic fluid, and **in that** the first chamber (19) of the second lift cylinder (10) communicates with the second chamber (17) of the first lift cylinder (9).

7. The agricultural machine according to claim 6, **characterized in that** the first chambers (16; 19) are piston-surface-side chambers and the second chambers (17; 20) are piston ring-side chambers.

8. The agricultural machine according to claim 7, insofar as referenced to claim 5, **characterized in that** the first chamber (16) of the first lift cylinder (9) communicates with the pressure relief valve and the first lift cylinder (9) has a larger cross section than the second lift cylinder (10).

9. The agricultural machine according to any one of the claims 6 to 8, **characterized in that** an unlockable check valve (21) is provided between the second chamber (20) of the second lift cylinder (10) and a tank.

10. The agricultural machine according to any one of the claims 6, 7 or 9, as far as referenced to claim 5, **characterized in that** the second chamber (20) of the second lift cylinder (10) communicates with the first buffer (29) and **in that** the first chamber (19) of the second lift cylinder (10) and the second chamber (17) of the first lift cylinder (9) communicate with a second buffer (28).

11. The agricultural machine according to claim 10, **characterized in that** the second chambers (17, 20) have a smaller cross section than the first chambers (16, 19).

12. The agricultural machine according to any one of the preceding claims, **characterized in that** a ground-touching tip of the supports (23, 11; 23, 24) is designed as skid (11) or as roller (24).

13. The agricultural machine according to any one of the preceding claims, **characterized by** means (25, 30) for detecting the vertical position of each support (23, 11; 23, 24).

14. The agricultural machine according to any one of the preceding claims, **characterized in that** the vehicle (1) has a crawler-type chassis (13).

## Revendications

1. Machine agricole de travail avec un véhicule (1) et un engin frontal (2), lequel est guidé de manière pivotante autour d'un axe orienté dans le sens du déplacement pendant le processus de moissonnage et présente un cadre (3, 5, 7) portant des outils de travail (4, 6), dans lequel la machine agricole de travail présente, en tant que moyens pour exercer une force, agissant à l'encontre d'un mouvement de pivotement dû à une vitesse de déplacement et/ou des irrégularités du sol de l'engin frontal (2) autour de l'axe, sur l'engin frontal (2), au moins deux béquilles (23, 11 ; 23, 24) disposées de manière espacée l'une de l'autre et mobiles verticalement sur le cadre (3, 5, 7) pour porter, en contact avec le sol, au moins une partie du poids de l'engin frontal (2), dans laquelle les béquilles (23, 11 ; 23, 24) sont déformables de manière réversible pour, lors d'un contact d'au moins l'une des béquilles (23, 11 ; 23, 24) avec le sol, exercer une force d'appui agissant à l'encontre du mouvement de pivotement de l'engin frontal (2), **caractérisée en ce**
**qu'**un dispositif d'accouplement est prévu entre les béquilles (23, 11 ; 23, 24) pour, lorsque l'une des béquilles (23, 11 ; 23, 24) cède à une charge, faire bouger l'autre béquille (23, 11 ; 23, 24) dans le même sens que cette béquille.

2. Machine de travail agricole selon la revendication 1, **caractérisée en ce qu'**une liaison entre le véhicule et l'engin frontal est élastique par rapport à un roulis de l'engin frontal pour, après un mouvement de pivotement de l'engin frontal hors d'une position de repos, entraîner un mouvement de repositionnement de l'engin frontal en direction de la position de repos, dans laquelle une béquille, que l'on a fait céder du fait du mouvement de pivotement, perd le contact avec le sol pendant le mouvement de repositionnement.

3. Machine agricole de travail selon la revendication 1 ou 2, **caractérisée en ce que** la capacité de charge maximale des béquilles (23, 11 ; 23, 24), lors du dépassement de laquelle les béquilles (23, 11 ; 23, 24) cèdent, est inférieure au poids de l'engin frontal (2).

4. Machine agricole de travail selon la revendication 1, 2 ou 3, **caractérisée en ce que** les béquilles (23, 11 ; 23, 24) présentent au moins un premier vérin hydraulique (9 ; 10) et que la pression dans au moins une chambre du premier vérin hydraulique (9 ; 10) est limitée par une soupape de surpression.

5. Machine agricole de travail selon la revendication 1, 2 ou 3, **caractérisée en ce que** les béquilles présentent au moins un premier vérin hydraulique (9) avec une chambre (16) raccordée à un premier tampon (29) et qu'en cas de dépassement de la capacité de charge maximale, du fluide hydraulique peut être refoulé de l'au moins une première chambre (16) dans le premier tampon (29).

6. Machine agricole de travail selon l'une des revendications 1 à 5, **caractérisée en ce que** le premier et un deuxième vérin hydraulique (9 ; 10) sont à effet double, avec respectivement une première chambre (16 ; 19) laquelle, pour l'exercice d'une force dirigée vers le bas sur la béquille (23, 11 ; 23, 24) associée au cylindre hydraulique (9 ; 10) respectif, peut être alimentée en fluide hydraulique, et une deuxième chambre (17 ; 20) laquelle, pour l'exercice d'une force dirigée vers le haut sur les béquilles (23, 11 ; 23, 24), peut être alimentée en fluide hydraulique, et que la première chambre (19) du deuxième vérin hydraulique (10) communique avec la deuxième chambre (17) du premier vérin hydraulique (9).

7. Machine agricole de travail selon la revendication 6, **caractérisée en ce que** les premières chambres (16 ; 19) sont des chambres côté surface de piston et les deuxième chambres (17 ; 20), des chambres côté segment de piston.

8. Machine agricole de travail selon la revendication 7, lorsqu'elle fait référence à la revendication 5, **caractérisée en ce que** la première chambre (16) du premier vérin hydraulique (9) communique avec la soupape de surpression et que le premier vérin hydraulique (9) présente une plus grande section transversale que le deuxième vérin hydraulique (10).

9. Machine agricole de travail selon l'une des revendications 6 à 8, **caractérisée en ce qu'**une soupape antiretour déblocable (21) est prévue entre la deuxième chambre (20) du deuxième vérin hydraulique (10) et un réservoir.

10. Machine agricole de travail selon l'une des revendications 6, 7 ou 9, lorsqu'elle fait référence à la revendication 5, **caractérisée en ce que** la deuxième chambre (20) du deuxième vérin hydraulique (10) communique avec le premier tampon (29) et que la première chambre (19) du deuxième vérin hydraulique (10) et la deuxième chambre (17) du premier vérin hydraulique (9) communiquent avec un deuxième tampon (28).

11. Machine agricole de travail selon la revendication 10, **caractérisée en ce que** les deuxièmes chambres (17, 20) ont une plus petite section transversale que les premières chambres (16, 19).

12. Machine agricole de travail selon l'une des revendications précédentes, **caractérisée en ce qu'**une pointe touchant le sol des béquilles (23, 11 ; 23, 24) est réalisée en tant que sabot (11) ou de rouleau (24).

13. Machine agricole de travail selon l'une des revendications précédentes, **caractérisée par** des moyens (25, 30) pour détecter la position verticale de chaque béquille (23, 11 ; 23, 24).

14. Machine agricole de travail selon l'une des revendications précédentes, **caractérisée en ce que** le véhicule (1) présente une chenille (13).
